# EUROPÄISCHE PATENTANMELDUNG

(11) **EP 4 427 865 A1**
(43) Veröffentlichungstag der Anmeldung: **11.09.2024**
(21) Anmeldenummer: 23160993.4
(22) Anmeldetag: 09.03.2023
(51) Int. Cl.: B21L 3/02, B23K 11/02, B23K 37/047

(54) **VERFAHREN UND VORRICHTUNG ZUM KETTENSCHWEISSEN**

(71) Anmelder: Pewag Engineering GmbH, 8605 Kapfenberg (AT)
(72) Erfinder: TOBIN, Oliver, 3004 Ollern (AT); SCHEIBNER, Markus, 8112 Eisbach (AT)
(74) Vertreter: Patentanwaltskanzlei Matschnig & Forsthuber OG

(57) **Zusammenfassung**

Ein Verfahren und eine Vorrichtung zum Kettenschweißen einer Kette (2) ausgehend von einer Kette aus offenen Kettengliedern in C-Form verwenden zum Führen und Befördern der Kette ein Förderrad (6), das ein oder mehrere Kettenglieder der Kette vorübergehend aufnimmt und zum Schweißen positioniert. Bevorzugt ist das Förderrad (6) als Doppelkettenrad ausgebildet, in dessen beiden Taschenräder je ein Kettenglied von zwei Kettentrumen (22, 24) der Kette vorübergehend aufgenommen wird. In je einem Durchgang für das Schweißen eines Kettenglieds wird das Förderrad relativ zu einer Schweißeinrichtung (4) quer zur Längsrichtung der im Förderrad geführten Kette verschoben und nimmt dann eine Schweißposition ein, in der ein zu schweißendes Kettenglied als in dem Förderrad stehendes Kettenglied der Schweißeinrichtung zugewandt ist und dessen offenen Enden verschweißt werden; danach wird das Förderrad aus der Schweißposition heraus verschoben und zum Befördern der Kette gedreht, um ein nächstes zu schweißendes Kettenglied in die Position zum Schweißen zu bringen. Dieser Durchgang wird für die einzelnen Kettenglieder wiederholt, wobei im Doppelkettenrad Kettenglieder der beiden Kettentrume (22, 24) abwechselnd geschweißt werden können.

## Beschreibung

Die Erfindung betrifft ein Verfahren und eine Vorrichtung zur Kettenschweißung. Hierbei wird eine Kette aus ineinander gefügten Kettengliedern ausgehend von einer noch ungeschweißten Kette erzeugt; die Kette im ungeschweißten Zustand ist aus einer Vielzahl von offenen Kettengliedern gebildet, die jeweils die Form eines zu einem offenen Ring (C-Form) geformten Strangstückes aufweisen, dessen offenen Enden einander zugewandt sind; sie sind zu einer fortlaufenden Kette zusammengefügt (ineinandergehängt), wobei jeweils aufeinander folgende Kettenglieder um einen Winkel von im Wesentlichen 90° zueinander verdreht sind

In herkömmlichen Verfahren zur Kettenschweißung kommt grundsätzlich eine von zwei bekannten Vorgehensweisen zur Anwendung. Bei einem ersten Ansatz wird die noch ungeschweißte Kette nach jeder Schweißung nachgedreht. Hierzu wird eine als Kettenwender bezeichnete Einrichtung verwendet. Die ungeschweißte Kette liegt dabei in einer Führung, welche sich nach jeder Schweißung eines Kettenglieds verdreht. Dadurch lassen sich die beiden Kettenreihen (linke und rechte Gliedreihe) in der Maschine direkt aufeinanderfolgend verschweißen. Ein zweiter Ansatz ist insofern etwas einfacher, als die Kette in einem ersten Durchlauf vollständig an den liegenden Kettengliedern und anschließend in einem zweiten Durchlauf an den stehenden Kettengliedern geschweißt wird. Die gesamte Kette muss somit zweimal durch die Schweißmaschine geführt werden; alternativ werden zwei hintereinander gereihte Kettenschweißmaschinen eingesetzt, sodass die Kette in einem Durchlauf geschweißt wird, um die Durchlaufzeit zu verkürzen.

Die genannten Ansätze sind umständlich und - besonders hinsichtlich des Kettenwenders - aufwendig. Es besteht daher der Wunsch nach einer effizienteren Handhabung der Kette zum Schweißen der Kettenglieder der beiden Orientierungen.

Die genannte Aufgabe wird erfindungsgemäß durch ein Verfahren zur Kettenschweißung der eingangs genannten Art gelöst, bei welchem unter Verwendung eines Förderrades, worin zum Führen der Kette zumindest eines der Kettenglieder der Kette vorübergehend aufgenommen wird, folgende Schritte ausgeführt werden:
- relatives Verschieben des Förderrades in Bezug auf eine Schweißeinrichtung quer zur Längsrichtung der im Förderrad geführten Kette, zum Einnehmen einer Schweißposition, in der ein zu schweißendes Kettenglied als in dem Förderrad stehendes Kettenglied mit seinen offenen Enden eine der Schweißeinrichtung zugewandte (und so für die Schweißbearbeitung geeignete) Position einnimmt,
- Verschweißen der offenen Enden des zu schweißenden Kettenglieds mithilfe der Schweißeinrichtung,
- relatives Verschieben des Förderrades und der Schweißeinrichtung quer zur Längsrichtung der im Förderrad geführten Kette aus der Schweißposition heraus (und zwar typischer Weise in eine Transportposition, die ein Befördern der Kette entlang deren Längsrichtung ohne Behinderung der oder durch die Schweißeinrichtung ermöglicht),
- Drehen des Förderrades zum Befördern der Kette, wodurch in die Position des soeben geschweißten Kettenglieds ein nächstes zu schweißendes Kettenglied gelangt,
wobei obige Schritte für mehrere zu schweißende Kettenglieder der Kette jeweils wiederholt werden.

Die Erfindung schafft somit eine technische Lösung für einen Kettenschweißprozess, bei der die einzelnen Kettenglieder über ein Kettenrad in Form eines Taschenrads geführt werden und mithilfe des Kettenrads in der Maschine in Schweißposition gebracht werden. Zudem kann die Kette mithilfe des Kettenrades weiter getaktet werden. Mithilfe des Kettenrads ermöglicht die Erfindung, die unterschiedlich ausgerichteten Kettenglieder dem Schweißprozess in ihren jeweiligen Lagen, d. h. stehend und liegend, zuzuführen, sodass sie in ihrer jeweiligen Stellung verschweißt werden können.

Durch die Erfindung lassen sich mehrere Vorteile erzielen. Insbesondere findet der Schweißprozess für die stehenden und die liegenden Kettenglieder in einem Werkzeug (d.h. derselben Vorrichtung) statt. Zudem ergibt sich eine verringerte Anfälligkeit gegenüber Verschmutzungen, mit einem Selbstreinigungseffekt infolge der Drehungsbewegungen, und eine lange Lebensdauer des Kettenrades bei geringer mechanischer Belastung der Kette.

Durch die Erfindung ergeben sich auch Vorteile beim Führen und Transportieren der Kette. Es ergibt sich ein schnellerer Ablauf mit erhöhter Sicherheit, das Führen der Kette kann durch Komponenten in der Kettenschweißvorrichtung selbst sichergestellt werden, was externe Antriebskomponenten vermeidet, und die zu schweißenden Kettenglieder können direkt am Ort des Schweißens (vor)positioniert werden.

Als Förderrad kann in vorteilhafter Weise ein Taschenrad verwendet werden. Dadurch wird eine besonders stabile Lagerung der Kettenglieder während des Schweißens der einzelnen Glieder und das Beförderns der Kette erreicht. Das Taschenrad kann bevorzugt derart ausgeführt sein, dass es entlang einer Umfangsrichtung Taschen zur Aufnahme liegender Glieder sowie eine in Umfangsrichtung verlaufende Rille zur Aufnahme stehender Glieder aufweist. Taschenräder sind an sich bekannt und stellen bewährte Mittel für die Halterung und Förderung von Gliederketten dar. Alternativ kann das Förderrad auch andersartig ausgeführt sein, beispielsweise als Zahnrad oder andere bekannte Kettenräder.

Es ist besonders vorteilhaft, wenn als Förderrad ein Doppelkettenrad mit zwei (oder mehr) nebeneinander angeordneten Kettenrädern, insbesondere Taschenrädern, verwendet wird, Bei dieser günstigen Weiterbildung kann die Kette zweimal um das Förderrad geführt werden, nämlich jeweils um eines der beiden Kettenräder unter Bildung einer Kettenschlaufe zwischen diesen, wobei in der Kettenschlaufe eine Verdrehung der Kette in Längsrichtung erfolgt, durch die auf einem ersten der Kettenräder liegende Kettenglieder als auf dem zweiten der Kettenräder stehende Kettenglieder geführt werden.

Hierbei kann zudem eine effizientere Durchführung der Schweißungen der beiden Kettengliedreihen erreicht werden, wenn in der Schweißposition die in den zwei Kettenrädern befindlichen stehenden Kettenglieder als zu schweißende Kettenglieder unmittelbar nacheinander geschweißt werden, wobei zwischen diesen beiden Schweißungen eine Verschiebung des Förderrades relativ zu der Schweißeinrichtung vorzugsweise entlang der Drehachse des Förderrads ausgeführt wird, um zwischen für die Schweißbearbeitung geeignete Positionen der beiden Kettenglieder zu wechseln. Für die Durchführung der relativen Verschiebung zwischen den beiden Schweißungen kann zweckmäßiger Weise das Förderrad und die Schweißeinrichtung vorübergehend aus der Schweißposition heraus relativ verschoben werden, vorzugsweise quer zur Längsrichtung der im Förderrad geführten Kette. Hierbei ist es auch von Vorteil, wenn die Taschen der nebeneinander angeordneten Taschenräder zueinander winkelmäßig versetzt angeordnet sind.

Hierbei ergibt sich auch ein Vorteil daraus, dass Nachbarglieder in einem Kettenstrang nicht unmittelbar nacheinander geschweißt werden, sondern erst nach dem Durchlaufen der Kettenschlaufe zwischen den beiden Kettenbahnen der verschiedenen Kettenräder. Dadurch ergibt sich eine Verringerung der Wärmeeinflusses und eine asymmetrische Belastung der Kettenglieder wird vermieden.

Ein alternatives vereinfachtes Schweißverfahren kann vorsehen, dass die Kette in zwei Durchgängen geschweißt wird, nämlich in einem ersten Durchgang, in dem eine erste Anzahl von Kettengliedern verschweißt wird, die auf dem Förderrad stehenden Kettengliedern entsprechen, und nach Drehung der Kette, durch die auf dem Förderrad liegende Kettenglieder in eine stehende Stellung gebracht werden, in einem zweiten Durchgang, in dem eine zweite Anzahl von Kettengliedern verschweißt wird, die auf dem Förderrad im ersten Durchlauf liegenden (und nunmehr stehenden) Kettengliedern entsprechen.

Gemäß einer weiteren alternativen Vorgangsweise des Schweißverfahrens kann vorgesehen sein, die Kette unter Verwendung von (zumindest) zwei Schweißeinrichtungen und (zumindest) zwei Förderrädern, die jeweils einer der Schweißeinrichtungen zugeordnet sind, zu schweißen. Hierbei können auf einem ersten Förderrad eine Anzahl erster Kettenglieder, die auf dem Förderrad stehende Kettenglieder sind, durch eine erste dieser Schweißeinrichtungen verschweißt und auf einem zweiten Förderrad eine Anzahl zweiter Kettenglieder durch eine zweite dieser Schweißeinrichtungen verschweißt werden, wobei die zweiten Kettenglieder auf dem ersten Förderrad liegenden (und auf dem zweiten Rad stehenden) Kettengliedern entsprechen, wobei vorzugsweise die Kette zwischen dem ersten und dem zweiten Förderrad im Sinne einer Drehung um die Längsrichtung verdreht wird.

Bei der Drehung des Förderrades zum Befördern der Kette kann günstiger Weise das auf das soeben geschweißte Kettenglied unmittelbar folgende (liegende) Kettenglied übersprungen werden.

Die oben genannte Aufgabe wird ebenfalls von einer Vorrichtung zur Kettenschweißung einer Kette aus ineinander gefügten Kettengliedern gelöst, mit einer Schweißeinrichtung zum Verschweißen der offenen Enden eines zu schweißenden Kettenglieds zum Herstellen eines geschlossenen Kettenglieds, und mit einem Förderrad, das zum Führen der Kette zur Aufnahme zumindest eines der Kettenglieder der Kette ausgebildet ist, wobei das Förderrad und die Schweißeinrichtung relativ zueinander zwischen einer Schweißposition und einer Transportposition quer zur Längsrichtung der in dem Förderrad geführten Kette verschiebbar sind, und wobei in der Schweißposition ein zu schweißendes Kettenglied von dem Förderrad mit seinen offenen Enden hervorsteht und an eine Schweißeinrichtung herangeführt ist, um ein Verschweißen des zu schweißenden Kettenglieds mithilfe der Schweißeinrichtung zu ermöglichen. In der Transportposition wird vorzugsweise ein Befördern der Kette entlang deren Längsrichtung ohne Behinderung der oder durch die Schweißeinrichtung ermöglicht.

Die Vorzüge dieser technischen Lösung einer Kettenschweißvorrichtung entsprechen denen des oben dargestellten erfindungsgemäßen Verfahrens.

Bei der erfindungsgemäßen Kettenschweißvorrichtung ist es zudem in der Regel von Vorteil, wenn die Schweißeinrichtung ortsfest montiert ist und das Förderrad einschließlich des darin aufgenommenen zumindest einen Kettenglieds quer zur Längsrichtung der Kette verschiebbar ist.

Es ist besonders vorteilhaft, wenn das Förderrad ein Doppelkettenrad mit zwei (oder mehr) nebeneinander angeordneten Kettenrädern ist, wie bereits im Zusammenhang mit dem erfindungsgemäßen Verfahren diskutiert worden ist.

Außerdem kann eine effizientere und zugleich sichere Durchführung der Schweißungen der beiden Kettengliedreihen erreicht werden, wenn die Schweißeinrichtung relativ zum Förderrad zudem entlang der Drehachse des Förderrads verschiebbar ist, insbesondere zwischen zwei für die Schweißbearbeitung der beiden stehenden Kettengliedern auf den zwei Kettenrädern geeigneten Positionen.

Außerdem kann ein überlastsichererer Aufbau erzielt werden, wenn in der Vorrichtung gefederte Drehmomentstützen vorgesehen sind, die die Kette beim Zuführen zu dem Kettenförderrad und/oder dem Ableiten von dem Kettenförderrad führen.

Die Erfindung wird nachstehend anhand eines Ausführungsbeispiels näher erläutert, das in den beigefügten Zeichnungen dargestellt ist. Es versteht sich, dass das Ausführungsbeispiel lediglich beispielhafter Art ist und nicht einschränkend für die Erfindung aufzufassen ist. Die Zeichnungen zeigen:
- Fig. 1: eine perspektivische Ansicht einer Vorrichtung zur Kettenschweißung einer Kette gemäß dem Ausführungsbeispiel, mit darin eingelegter Kette;
- Fig. 1a: eine Vorderansicht der Kettenschweißvorrichtung der Fig. 1;
- Fig. 2: einen perspektivische Ansicht der Kettenschweißvorrichtung der Fig. 1 bei abgenommener Schweißeinrichtung;
- Fig. 3: eine perspektivische Teil-Rückansicht der Vorrichtung der Fig. 1;
- Fig. 4: eine Schnittansicht der Kettenschweißvorrichtung der Fig. 1 bei abgenommener Schweißeinrichtung, gemäß einer Schnittebene längs einer senkrechten Ebene durch die Achse des Kettenförderrads;
- Fig. 5: einen Ausschnitt in Draufsicht auf den mittleren Bereich der Kettenschweißvorrichtung bei abgenommener Schweißeinrichtung;
- Fig. 6a: das Kettenförderrad gemäß dem Ausführungsbeispiel in perspektivischer Ansicht ohne Kette;
- Fig. 6b: das Kettenförderrad mit aufgelegter Kette;
- Fig. 7a - 7d: das Kettenförderrad in weiteren Ansichten, nämlich Fig. 7a eine Seitenansicht, Fig. 7b eine Schnittansicht durch die Mittelebene m1 des ersten Taschenrades, Fig. 7c eine Schnittansicht durch die Mittelebene m2 des zweiten Taschenrades, Fig. 7d eine Vorderansicht (Stirnfläche); und
- Fig. 8a - 8j: illustrieren den Ablauf eines Durchgangs eines Schweißprozess in der Vorrichtung der Fig. 1.

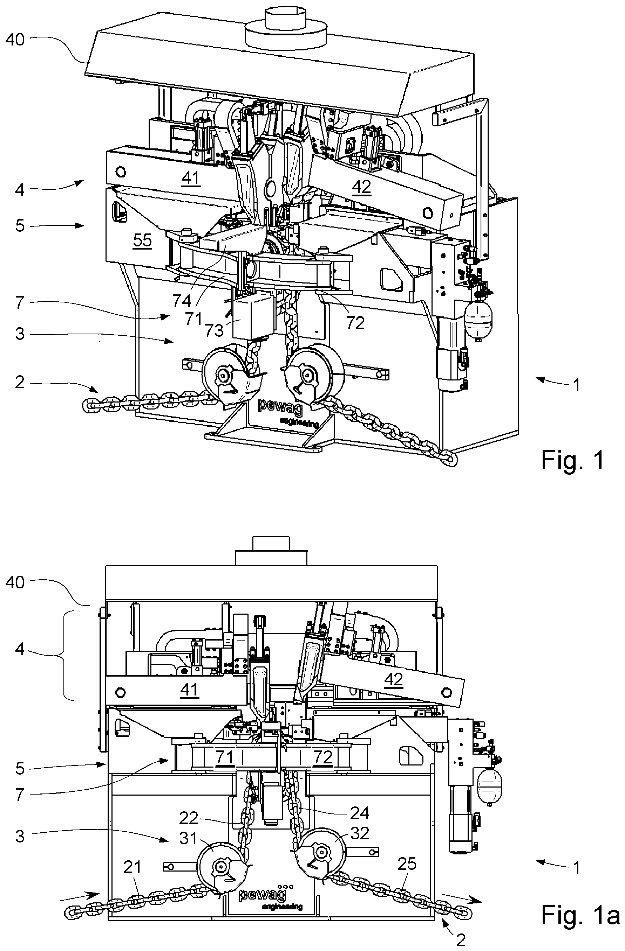

Die eingehende Beschreibung des Ausführungsbeispiel erläutert die der Erfindung zugrunde liegenden Ideen, deren Ausführung sowie weitere Vorzüge und Ausgestaltungen. Es versteht sich, dass, wo immer verschiedenen Varianten angegeben werden, einzelne oder sämtliche dieser Varianten frei miteinander kombiniert werden können, soweit diese dem Fachmann als zweckmäßig einleuchtet. Begriffe wie *"*vorteilhaft*"*, *"*beispielhaft*"*, *"*typisch*"* oder *"*vorzugsweise*"* zeigen Element oder Maße an, die besonders günstig, aber nicht wesentlich für die Erfindung oder ein Ausführungsbeispiel sind; diese können stets, wenn der Fachmann dies als zweckmäßig erachtet, abgewandelt werden, sofern diese nicht ausdrücklich als wesentlich bezeichnet sind. Begriffe, die Orientierungen bezeichnen, wie *"*senkrecht*"* oder *"*horizontal*"* beziehen sich auf den Zustand der Kettenschweißvorrichtung in deren Betriebszustand (vgl. Fig. 1-6). Auch ist zu würdigen, dass die Erfindung nicht auf die Ausführungsform(en) beschränkt ist, die nachstehend diskutiert ist/sind, sondern die Diskussion der Ausführungsformen zur Erläuterung der Erfindung und Aufzeigen von möglichen Ausgestaltungen dient.

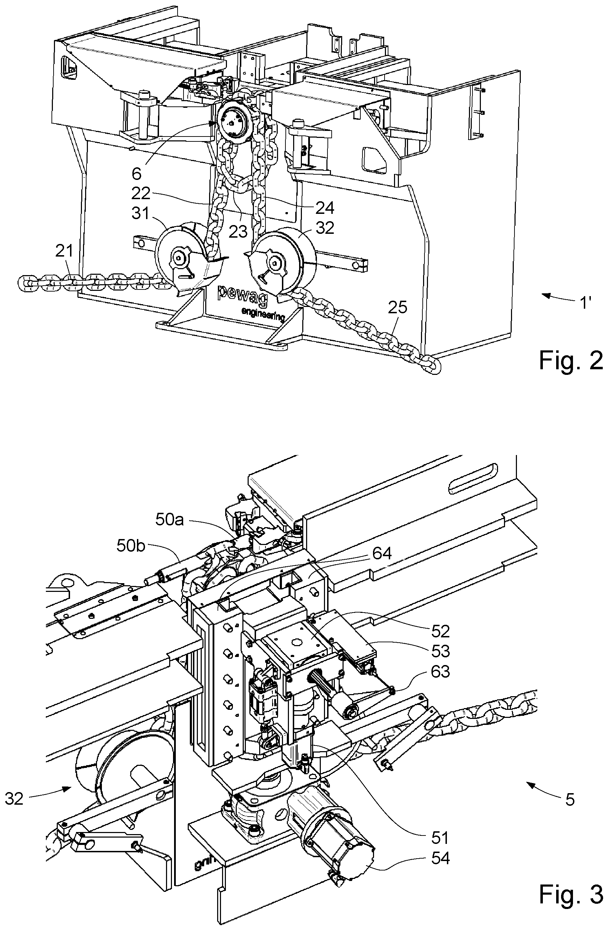

Die Figuren 1 und 1a zeigen eine Kettenschweißvorrichtung 1 gemäß einem Ausführungsbeispiel der Erfindung in einer perspektivischen Ansicht bzw. einer Ansicht von vorne. Die Kettenschweißvorrichtung 1 ist mit darin eingelegter Kette 2 dargestellt und umfasst ein Führungssystem 3 für die Kette, eine Schweißeinrichtung 4 einschließlich einer Abzugshaube 40, eine Antriebsmechanik 5, ein Förderrad 6 sowie eine Vorderabdeckung 7. In Figuren 2 bis 5 ist die eröffnete Kettenschweißvorrichtung 1' in einem Zustand bei abgenommener Schweißeinrichtung 4 und entfernter Vorderabdeckung 7 dargestellt.

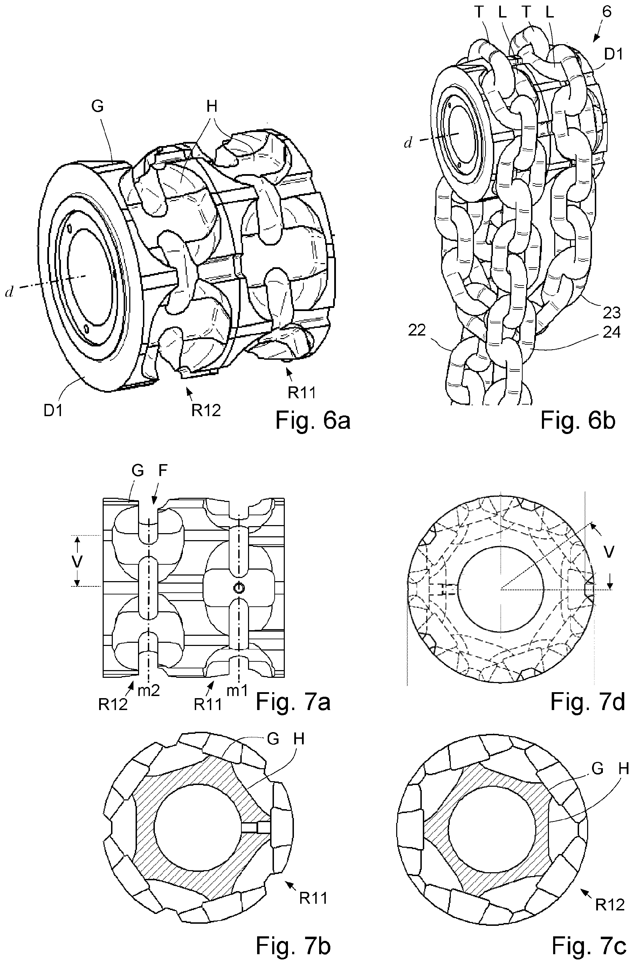

Wie in den Figuren erkennbar wird die zu schweißende Kette 2 über ein Förderrad 6 geführt. Das Förderrad 6 dient dem Positionieren und Befördern der zu schweißenden Kette; es wird daher auch als Kettenförderrad bezeichnet. Das Kettenförderrad ist vorzugsweise, wie auch in Fig. 6a und 6b gezeigt, als Doppeltaschenrad D1 ausgeführt.

Das Führungssystem 3 beinhaltet insbesondere zwei Führungsrollen 31, 32, die zum Führen der Kette 2 dienen, nämlich von dem zugeführten Kettenbereich 21 das einlaufende Trum 22 zum Zweck des Zuführens zu dem Kettenförderrad 6 sowie zum Zweck des Ableitens von dem Kettenförderrad 6 das ausgehende Trum 24 des fertiggeschweißten Kettenbereichs 25 zu führen. Hierein werden als *"*Kettentrume*"* oder kurz *"*Trume*"*, gemäß üblicher Terminologie, die Abschnitte der Kette, die jeweils einer bestimmten Zugkraft unterliegen, bezeichnet. Zugleich sorgt das Führungssystem 3 mithilfe der Führungsrollen 31, 32, die als gefederte Drehmomentstützen, die z. B. an dem Gehäuse der Vorrichtung 1 über Gelenkverbindungen befestigt sind, ausgeführt sind, für eine Vorspannung der Kettentrume 22, 24 zu bzw. von dem Förderrad.

Die Schweißeinrichtung 4 ist nach an sich bekannter Art als Einrichtung zum Abbrennstumpfschweißen ausgebildet, kann jedoch auch als Einrichtung für andere Arten von Schweißverfahren, insbesondere Widerstandspressschweißverfahren ausgeführt werden. In Fig. 1 und 1a ist einer der beiden Schweißarme 41, 42 angehoben dargestellt, zur besseren Sichtbarkeit des Förderrades 6 in der Vorrichtung 1; aber es liegt selbstverständlich auf der Hand, dass während des Arbeitsprozesses beide Schweißarme gerade positioniert sind.

Die Antriebsmechanik 5 umfasst Komponenten zum Antrieb des Förderrads 6 zur Drehbewegung sowie Verschiebungsbewegung entlang bevorzugt zwei Richtungen (vertikal sowie parallel zur Drehachse) wie nachstehend erläutert. Außerdem sind Halteeinrichtungen (mit sogenannten Stauchstählen 50a, 50b) zum Festhalten und Komprimieren von Kettengliedern, die auf dem Förderrad positioniert sind, während des Schweißvorgangs vorgesehen.

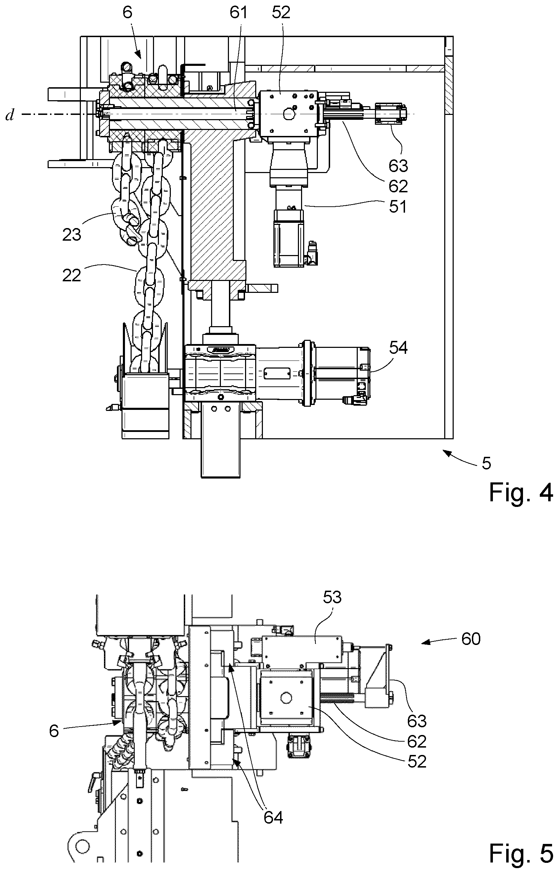

Bezugnehmend insbesondere auf Figuren 4 - 6 bewirkt die Antriebsmechanik 5 die Drehung und Verschiebung des Förderrads 6 mithilfe geeigneter Elektromotoren bzw. Servomotoren:
Ein Vorzugsantrieb 51 ist zur Drehung des Förderrades 6 (Vorschub) vorgesehen, z. B. in Form eines Elektromotors, der die Welle 61 des Förderrades 6 zur Drehung antreibt, beispielsweise mittels eines Kegelradgetriebes 52 (z. B. in Form einer in eigenem Gehäuse vormontierten Getriebebaugruppe, z. B. von Tandler FS2 HWK), das mit einem Keilwellenabschnitt 62 der Welle 61 zusammenwirkt, die durch das Kegelradgetriebe 52 verläuft.

Ein Verschiebungsantrieb 53 ist zum Verschieben der Position des Förderrades 6 entlang seiner Drehachse d eingerichtet. Der Verschiebungsantrieb 53 ist beispielsweise ein Servomotor, der seitlich des Kegelradgetriebes 52 angeordnet ist und über ein Verbindungsstück 63 auf ein Ende der Welle 61 wirkt. Die Verschubweite des Spindelmotors kann fest auf einen Abstand voreingestellt sein, der dem relativen Versatz der beiden Kettenräder (Abstand der Mittelebenen m1, m2, siehe Fig. 7a) entspricht.

Die beiden Antriebe 51, 53 können vorteilhafterweise zu einer Baugruppe 60 zusammengefasst sein, die auch die Welle 61 samt dem daran befestigten Förderrad 6 umfasst. Die Baugruppe 60 ist in einer Linearführung 64 (z. B. Gleitlager) gehalten, das eine vertikale Bewegung der Baugruppe 60 ermöglicht.

Ein Hubantrieb 54, beispielsweise in Form eines Spindelhubgetriebes, ist für das horizontale Bewegen des Förderrades 6. Hierzu wird die Baugruppe 60 durch den Hubantrieb bewegt. Die Kontrolle der vertikalen Position erfolgt über Detektoren, die in der Linearführung 64 vorgesehen sind; alternativ kann auch der Hubantrieb eine Schrittmotorfunktion aufweisen.

Beiderseits seitlich der Position des Förderrades 6 sind Halteeinrichtungen 55 an sich bekannter Art vorgesehen, die insbesondere sogenannte Stauchstähle 50a, 50b beinhalten, die dazu dienen, während eines Schweißvorgangs die zu schweißenden Kettenglieder in ihrer Position auf dem Förderrad zu halten und zusammenzupressen. Während eines Schweißvorgangs findet kein Motorbetrieb statt, vielmehr werden die Kettenglieder lediglich zwischen den Schweißvorgängen bewegt.

Wieder Bezug nehmend auf Fig. 1 enthält die Vorderabdeckung 7 zwei Bügel 71, 72, die das Förderrad 6 vorderseitig überspannen und zur Maschinensteifigkeit beitragen, sowie unter und über den Mittelteilen der Bügel 71, 72 daran angebrachte Spritzschutzteile 73, 74. Die Bügel 71, 72 sind gelenkig an dem Gehäuse der Halteeinrichtungen 55 montiert und sind aufklappbar, z. B. zum Einlegen der Kette 2 auf das Förderrad 6 zu Beginn eines Schweißdurchlaufs.

Wie insbesondere in Fig. 2 und Fig. 6b erkennbar ist, ist die Kette zweifach über das Doppeltaschenrad 6 geführt. Die Kette verläuft in der Vorrichtung somit entlang zwei Trumen, nämlich einem einlaufenden Trum 22 und einem ausgehenden Trum 24, sowie zwischen diesen beiden einem als Kettenschlaufe 23 bezeichneten Leertrum unter dem Förderrad; auf dem Förderrad gehen die Trume 22, 23, 24 ineinander über. In der Kettenschlaufe wird die Kette um 90° verdreht. Dadurch gelingt es, wie nachstehend eingehend erläutert, beide Gliederreihen (der stehenden bzw. liegenden Kettenglieder) in einem Prozess zu verschweißen.

Bezugnehmend auf Figuren 6a, 6b und 7a-7d ist das Kettenförderrad 6 als Doppelkettenrad D1 ausgeführt, das aus zwei Kettenrädern R11, R12 gebildet ist. Vorzugsweise sind die beiden Taschenräder R11, R12 nicht als getrennte Komponenten ausgeführt, sondern beide Taschenräder bilden ein Bauteil, sodass wie in der gezeigten Ausführungsform das Förderrad 6 einstückig ist. In anderen (nicht gezeigten) Ausführungsformen kann das Doppelkettenrad drehfest aus zwei getrennten Kettenrädern zusammengesetzt worden sein, z. B. durch ein Steck-, Schraub- oder Klebungsverbindung.

Jedes der Kettenräder R11, R12 ist als sogenanntes Taschenkettenrad ausgebildet. Es besitzt demnach Taschen H, die der ovalen Gliedform angepasst sind und die eine im wesentlichen plane Auflagefläche (Taschenboden) für je ein liegendes Kettenglied L besitzen. Die Taschen des Kettenrades sind gegeneinander durch Stege G abgegrenzt, wobei jeder Steg durch eine Rille F zur Aufnahme der stehenden Glieder T in der Mittenebene m1, m2 des Kettenrades R11, R12 unterbrochen ist. Im vorliegenden Ausführungsbeispiel hat das Kettenrad in der Seitenansicht eine pentagonale Formgebung (*n*=5), mit fünf Taschen H und dem entsprechend fünf diese gegeneinander begrenzenden Stegen G; doch ist es klar, dass ein Kettenrad ohne Weiteres auch eine größere oder kleinere Anzahl *n* von Taschen sowie Stegen besitzen kann. Die Stege G haben konvexe Flanken, die an ihrem *"*inneren*"* (d.h. der Drehachse *d* nächstgelegenen) Rand unmittelbar in die planen Auflageflächen der Taschen H übergehen. In dem vorzugsweise eben ausgebildeten Boden der Rillen F für die stehenden Glieder T können sich die stehenden Glieder T am Rillenboden der Rille F abstützen, sodass für eine korrekte Position der Glieder gesorgt ist. Durch diese Gestaltung des Kettenrades sind sowohl die liegenden Glieder L als auch die stehenden Glieder T flächig abgestützt, nämlich die liegenden Glieder L mit einem Großteil ihrer Seitenflächen an der Auflagefläche der Taschen und die stehenden Glieder T mit der Außenfläche des innen liegenden Schenkels an dem Rillenboden.

In dem Doppelkettenrad D1 sind die beiden Kettenräder R11, R12 nebeneinander koaxial drehfest miteinander verbunden. Vorteilhafterweise haben die Kettenräder zueinander einen Winkelversatz, d.h. die Kettentaschen des einen Kettenrades R11 befinden sich in einer unterschiedlichen Winkellage zu den Kettentaschen des anderen Kettenrades R12, gesehen entlang der Drehachse *d*. Gleichbedeutend kann dies auch auf die Stege G bezogen werden, d.h. es befinden sich die Stege G des einen Kettenrades R11 in einer unterschiedlichen Winkellage zu den Stegen G des anderen Kettenrades R12, bei Blickrichtung entlang der Drehachse *d*. Dieser Winkelversatz V beträgt in der gezeigten Ausführungsform eine Winkelteilung der Kette auf dem pentagonalen Kettenrad (entsprechend 360°/2*n* = 36° mit *n*=5); das bedeutet, dass die liegenden Kettenglieder des einen Kettenrades mit den stehenden Kettengliedern des anderen Kettenrades auf gleicher Winkellage ausgerichtet sind, und umgekehrt.

Die Winkelteilung ist auf einem Kettenrad als der Winkelunterschied zwischen einer Kettentasche H und einem der beiden Stege G, die diese Kettentasche begrenzen, erkennbar, gemessen beispielsweise anhand der Radiusstrahlen, die durch den Mittelpunkt der Kettentasche bzw. des Stegs verläuft (vgl. Fig. 7d). Damit gleichbedeutend ist die Winkelteilung die Hälfte des Winkelunterschiedes zwischen je zwei aufeinanderfolgenden Kettentaschen H (oder Stegen G) desselben Kettenrades; dadurch haben auch zwei aufeinanderfolgende Kettenglieder T, L auf dem Kettenrad zueinander einen Winkelabstand, der der Winkelteilung entspricht.

Insgesamt werden für beide über das Doppelkettenrad geführte Kettentrume die einzelnen Kettenglieder abwechselnd stehend T und liegend L auf dem jeweiligen Kettenrad R11, R12 gehalten und sind so in je einer *"*Kettenbahn*"* geführt.

Alternativ zu dem gezeigten Ausführungsbeispiel, insbesondere in dem Falle dass das Förderrad als einfaches Taschenrad ausgebildet ist, könnte die Kette auch in zwei Durchgängen durch eine Schweißanlage mit einem solchen einfachen Förderrad geführt werden, wobei beim ersten Durchgang die Kette über das Taschenrad läuft und die erste Gliederreihe verschweißt wird. Beim zweiten Durchgang durch die Maschine wird die - zuvor um 90° gedrehte - Kette nochmals über das Taschenrad geführt und so die zweite Gliederreihe verschweißt.

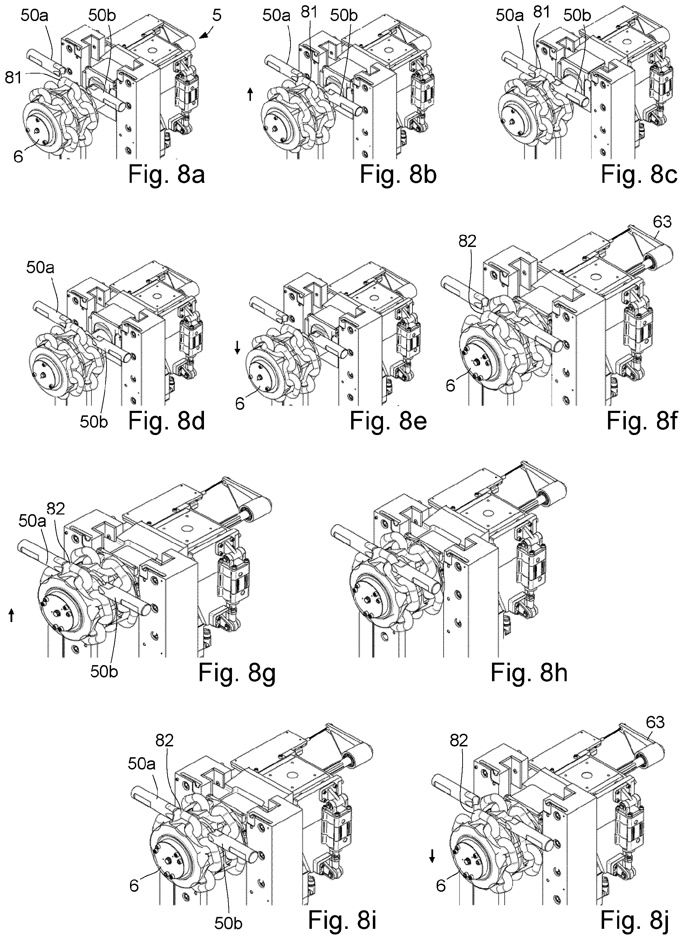

Bezugnehmend auf Figuren 8a bis 8j wird nachstehend eine beispielhafte Ausgestaltung des Schweißprozesses erläutert, der anhand der Vorrichtung der Fig. 1-7 erläutert wird. Im Laufe eines Schweißprozesses wird das Förderrad 6 mithilfe der Antriebsmechanik 5 auf und ab, sowie vor und zurück bewegt, um die Kette 2 für den Kettenschweißprozess in geeigneter Weise zu positionieren. Die Figuren 8a bis 8j zeigen die nachstehend erläuterten einzelnen Prozessschritte. Der Deutlichkeit der Darstellung halber sind in den Fig. 8a-8j lediglich die wesentlichen Komponenten dargestellt, nämlich das Förderrad 6, die auf diesem angeordneten Kettenglieder, der obere Teil der Antriebsmechanik 5 sowie die Stauchstähle 50a, 50b (ohne deren Halterungen); der Fachmann kann ohne weiteres die übrigen zugehörenden Komponenten der Kettenschweißvorrichtung aus der übrigen Offenbarung erschließen.

Der nachstehend erläuterte Prozess geht davon aus, dass die Kette 2 in die Vorrichtung 1 derart eingelegt ist, dass die Kette zuerst über das hintere Taschenrad des Doppelkettenrades 6 läuft und sodann - nach Durchlaufen der Kettenschlaufe 23, die in den Zeichnungen der Fig. 8a-8j nicht dargestellt ist - über das vordere Taschenrad geführt ist. Selbstverständlich kann die Reihenfolge auch umgekehrt sein, je nach Maßgabe des gewünschten Schweißprozesses. Ausgangspunkt der nachfolgend dargestellten Schrittfolge (d.h. unmittelbar vor Schritt 1) ist eine Position von Förderrad und Kette, worin sich das Förderrad unterhalb der Schweißeinrichtung 4 in einer Position, in der das hintere Taschenrad mit der Schweißeinrichtung ausgerichtet ist (z. B. in einer gemeinsamen vertikalen Ebene in Bezug auf die Schweißelektroden), und vorzugsweise unter der Schweißeinrichtung in einem Abstand zu dieser befindet, was eine ungehinderte Drehungsbewegung des Förderrades bei darin aufgelegter Kette, aber auch ein Einlegen der Kette (sowie später Abnehmen der Kette) ermöglicht, ohne eine Behinderung durch die Komponenten der Schweißeinrichtung oder Beschädigung der letzteren oder der Kettenglieder zu erleiden.

**Schritt 1 -** **Fig. 8a****:** Das Förderrad führt eine geeignete Drehung durch, dadurch wird die Kette 2 in eine Stellung befördert, die eine Vorpositionierung für die optimale Schweißposition ergibt, wobei ein stehendes Kettenglied 81 der Schweißeinrichtung 4 zugewandt orientiert ist. Gegebenenfalls findet auch eine Positionierung entlang der Drehachse des Förderrades statt (vgl. hierzu Schritt 11).

**Schritt 2 -** **Fig. 8b****:** Im zweiten Schritt wird das Kettenförderrad 6 mittels der Antriebsmechanik 5 nach oben verschoben, sodass sich das Kettenglied 81 zwischen den beiden Stauchstählen 50a, 50b befindet.

**Schritt 3 -** Fig. **8c****:** An das Kettenglied 81, das sich in der Schweißposition befindet, fahren die Stauchstähle 50a, 50b zum Kettenglied hin, sodass sie das (noch C-förmige) zu schweißende Kettenglied klemmen. Je nach Prozessanforderungen können die Stauchstähle auch so weit zusammenfahren, bis sich die beiden Kettengliedenden berühren. Sodann erfolgt das Schweißen des Kettenglieds zu einem geschlossenen Kettenglied nach an sich bekannter Art mithilfe der Schweißeinrichtung 4 (in der Figur nicht gezeigt; siehe Fig. 1). Der Schweißprozess ist beispielsweise ein Abbrennstumpfschweißprozess, es kann jedoch auch ein anderes zweckmäßiges Schweißverfahren, insbesondere Widerstandspressschweißverfahren, eingesetzt werden

**Schritt 4 -** **Fig. 8d****:** Nach erfolgtem Schweißen fahren die Stauchstähle 50a, 50b wieder auseinander, in ihre Ausgangsposition (vgl. Fig. 8b), und somit von dem Kettenglied weg. Dadurch wird das soeben geschweißte Kettenglied freigegeben.

**Schritt 5** - **Fig. 8e****:** Das Kettenförderrad 6 wird nach unten verfahren. Es befindet sich somit wieder in einer Position entsprechend jener der Fig. 8a.

**Schritt 6** - **Fig. 8f****:** Das Förderrad wird um einen Winkel weitergedreht, der einer Kettenteilung entspricht; dadurch wird das nächste zu schweißende stehende Kettenglied 82, das sich allerdings auf dem anderen Taschenrad befindet, in eine Position gebracht, worin es der Schweißeinrichtung 4 zugewandt orientiert ist. In demselben Schritt erfolgt eine Verschiebung entlang der Drehachse um eine Verschubweite entsprechend dem Abstand der beiden Kettengliedreihen nebeneinander auf dem Kettenförderrad 6; auf diese Weise wird zwischen den beiden Trumen gewechselt (Kettenradbahnwechsel). In dem gezeigten Ausführungsbeispiel entspricht dies einer linearen Verschiebung des Förderrades nach hinten. Ob die Verschiebung und Drehung des Förderrades zugleich oder nacheinander ausgeführt werden, ist für die Erfindung nicht wesentlich, in dem hier gezeigten Ausführungsbeispiel findet zuerst die Verschiebung und dann die Drehung statt (der Zwischenzustand ist in den Zeichnungen nicht dargestellt).

**Schritt 7 -** **Fig. 8g****:** Das Kettenförderrad wird mittels der Antriebsmechanik 5 nach oben verschoben, sodass sich das Kettenglied 82 zwischen den beiden Stauchstählen 50a, 50b befindet. Dies entspricht Schritt 2, nur auf der anderen Kettenradbahn, d. h. dem vorderen Taschenrad.

**Schritt 8 -** **Fig. 8h****:** An das Kettenglied 82 fahren die Stauchstähle 50a, 50b zum Kettenglied hin und sodann erfolgt das Schweißen des Kettenglieds zu einem geschlossenen Kettenglied. Dieser Schritt entspricht dem Schritt 3, und es gilt sinngemäß das zu Schritt 3 Gesagte.

**Schritt 9 -** **Fig. 8i****:** Nach erfolgtem Schweißen fahren Stauchstähle 50a, 50b wieder auseinander und gelangen in ihre Ausgangsposition (vgl. Fig. 8b u. 8g). Dadurch wird das soeben geschweißte Kettenglied 82 freigegeben.

**Schritt 10** - **Fig. 8j****:** Das Kettenförderrad 6 wird nach unten verfahren. Es befindet sich somit wieder in einer Position entsprechend jener der Fig. 8f.

**Schritt 11 -** **Fig. 8a****:** Das Förderrad führt eine weitere Drehung durch, um einen Winkel, der einer Kettenteilung entspricht; dadurch wird das nächste zu schweißende stehende Kettenglied auf dem nunmehr wieder hinteren Taschenrad, in eine der Schweißeinrichtung 4 zugewandten Position gebracht. In demselben Schritt (z. B. unmittelbar vorher) erfolgt eine Verschiebung entlang der Drehachse um eine Distanz, die jener des Schritts 8f entgegengesetzt ist (Kettenradbahnwechsel). In dem gezeigten Ausführungsbeispiel entspricht dies einer Verschiebung des Förderrades vorwärts.

Mit Schritt 11 wird dieselbe Positionierung des Förderrades wie die Fig. 8a erreicht; lediglich ist die Kette um eine vollständige doppelte Teilung weitergeführt worden. Der Kettenschweißprozess wird für diese nächsten Kettenglieder mit Fig. 8b usw. fortgesetzt.

Ein Vorschub der Kette findet somit für die gesamte Kette, insbesondere für die Kettentrume 22, 23 24, in den Schritten statt, in denen das Kettenförderrad 6 gedreht wird, somit Schritt 1 = Schritt 11 sowie Schritt 6.

Selbstverständlich ist die Erfindung nicht auf das oben dargestellte Ausführungsbeispiel beschränkt. Beispielsweise kann auch ein Doppelkettenrad verwendet werden, in dem die beiden Kettenräder einen anderen Winkelversatz oder keinen Winkelversatz aufweisen. Bei einem Schweißprozess sind in diesem Fall die Vorschubwinkel der Drehungen entsprechend anzupassen; im Übrigen kann der Schweißprozess wie oben dargestellt ablaufen. Insbesondere bei einem Doppelkettenrad ohne Winkelversatz liegen die Kettentaschen der beiden Kettenräder in gleicher Winkellage entlang der Drehachse des Doppelkettenrades gesehen. In diesem Fall können die beiden stehenden Glieder beider Kettenradbahnen unmittelbar nacheinander geschweißt werden; die würde einem gegenüber den Fig. 8a-8j abgeänderten Vorgang entsprechen, worin bei Schritt 6 die Drehung entfällt, wogegen die Drehung in Schritt 11 einen Vorschub gemäß einem Winkel entsprechend einer doppelten Kettenteilung ausführt.

## Patentansprüche

1. Verfahren zur Kettenschweißung einer Kette (2) aus ineinander gefügten Kettengliedern, ausgehend von einer noch ungeschweißten Kette (21), die aus einer Vielzahl von offenen Kettengliedern gebildet ist, die jeweils die Form eines zu einer C-Form geformten Strangstückes, dessen offenen Enden einander zugewandt sind, aufweisen und zu einer fortlaufenden Kette zusammengefügt sind, wobei jeweils aufeinander folgende Kettenglieder um einen Winkel von im Wesentlichen 90° zueinander verdreht sind, **gekennzeichnet durch** folgende Schritte, die unter Verwendung eines Förderrades (6), worin zum Führen der Kette zumindest eines der Kettenglieder der Kette vorübergehend aufgenommen wird, ausgeführt werden:
- relatives Verschieben des Förderrades (6) in Bezug auf eine Schweißeinrichtung (4) quer zur Längsrichtung der im Förderrad geführten Kette, zum Einnehmen einer Schweißposition, in der ein zu schweißendes Kettenglied als in dem Förderrad stehendes Kettenglied mit seinen offenen Enden eine der Schweißeinrichtung zugewandte Position einnimmt,
- Verschweißen der offenen Enden des zu schweißenden Kettenglieds mithilfe der Schweißeinrichtung,
- relatives Verschieben des Förderrades und der Schweißeinrichtung quer zur Längsrichtung der im Förderrad geführten Kette aus der Schweißposition heraus,
- Drehen des Förderrades zum Befördern der Kette, wodurch in die Position des soeben geschweißten Kettenglieds ein nächstes zu schweißendes Kettenglied gelangt,
wobei obige Schritte für mehrere zu schweißende Kettenglieder der Kette jeweils wiederholt werden.

2. Verfahren nach Anspruch 1, werden als Förderrad ein Taschenrad verwendet wird, welches entlang einer Umfangsrichtung Taschen zur Aufnahme liegender Glieder sowie eine in Umfangsrichtung verlaufende Rille zur Aufnahme stehender Glieder aufweist.

3. Verfahren nach Anspruch 1 oder 2, wobei als Förderrad ein Doppelkettenrad mit zwei nebeneinander angeordneten Kettenrädern, insbesondere Taschenrädern, verwendet wird, wobei die Kette zweimal um das Förderrad geführt wird, nämlich jeweils um eines der beiden Kettenräder unter Bildung einer Kettenschlaufe zwischen diesen, wobei in der Kettenschlaufe eine Verdrehung der Kette in Längsrichtung erfolgt, durch die auf einem ersten der Kettenräder liegende Kettenglieder als auf dem zweiten der Kettenräder stehende Kettenglieder geführt werden.

4. Verfahren nach Anspruch 3, wobei in der Schweißposition die in den zwei Kettenrädern befindlichen stehenden Kettenglieder als zu schweißende Kettenglieder unmittelbar nacheinander geschweißt werden, wobei zwischen diesen beiden Schweißungen eine Verschiebung des Förderrades relativ zu der Schweißeinrichtung vorzugsweise entlang der Drehachse des Förderrads ausgeführt wird, um zwischen für die Schweißbearbeitung geeignete Positionen der beiden Kettenglieder zu wechseln.

5. Verfahren nach Anspruch 4, wobei für die Durchführung der relativen Verschiebung zwischen den beiden Schweißungen das Förderrad und die Schweißeinrichtung vorübergehend aus der Schweißposition heraus relativ verschoben werden, vorzugsweise quer zur Längsrichtung der im Förderrad geführten Kette.

6. Verfahren nach Anspruch 1 oder 2, wobei die Kette in zwei Durchgängen geschweißt wird, nämlich in einem ersten Durchgang, in dem eine erste Anzahl von Kettengliedern verschweißt wird, die auf dem Förderrad stehenden Kettengliedern entsprechen, und nach Drehung der Kette, durch die auf dem Förderrad liegende Kettenglieder in eine stehende Stellung gebracht werden, in einem zweiten Durchgang, in dem eine zweite Anzahl von Kettengliedern verschweißt wird, die auf dem Förderrad im ersten Durchlauf liegenden Kettengliedern entsprechen.

7. Verfahren nach Anspruch 1 oder 2, wobei die Kette unter Verwendung von zwei Schweißeinrichtungen und zwei Förderrädern, die jeweils einer der Schweißeinrichtungen zugeordnet sind, verschweißt wird, wobei auf einem ersten Förderrad eine Anzahl erster Kettenglieder, die auf dem Förderrad stehende Kettenglieder sind, durch eine erste dieser Schweißeinrichtungen verschweißt wird, und auf einem zweiten Förderrad eine Anzahl zweiter Kettenglieder durch eine zweite dieser Schweißeinrichtungen verschweißt wird, wobei die zweiten Kettenglieder auf dem ersten Förderrad liegenden Kettengliedern entsprechen, wobei vorzugsweise die Kette zwischen dem ersten und dem zweiten Förderrad im Sinne einer Drehung um die Längsrichtung verdreht wird.

8. Verfahren nach Anspruch 6 oder 7, wobei bei der Drehen des Förderrades zum Befördern der Kette das auf das soeben geschweißte Kettenglied unmittelbar folgende Kettenglied übersprungen wird.

9. Vorrichtung zur Kettenschweißung einer Kette aus ineinander gefügten Kettengliedern, ausgehend von einer noch ungeschweißten Kette, die aus einer Vielzahl von offenen Kettengliedern gebildet ist, die jeweils die Form eines zu einer C-Form geformten Strangstückes, dessen offenen Enden einander zugewandt sind, aufweisen und zu einer fortlaufenden Kette zusammengefügt sind, wobei jeweils aufeinander folgende Kettenglieder um einen Winkel von im Wesentlichen 90° zueinander verdreht sind,
mit einer Schweißeinrichtung zum Verschweißen der offenen Enden eines zu schweißenden Kettenglieds zum Herstellen eines geschlossenen Kettenglieds, und mit einem Förderrad, das zum Führen der Kette zur Aufnahme zumindest eines der Kettenglieder der Kette ausgebildet ist,
wobei das Förderrad und die Schweißeinrichtung relativ zueinander zwischen einer Schweißposition und einer Transportposition quer zur Längsrichtung der in dem Förderrad geführten Kette verschiebbar sind,
wobei in der Schweißposition ein zu schweißendes Kettenglied von dem Förderrad mit seinen offenen Enden hervorsteht und an eine Schweißeinrichtung herangeführt ist, um ein Verschweißen des zu schweißenden Kettenglieds mithilfe der Schweißeinrichtung zu ermöglichen,
wobei in der Transportposition ein Befördern der Kette entlang deren Längsrichtung ohne Behinderung der oder durch die Schweißeinrichtung ermöglicht ist.

10. Vorrichtung zur Kettenschweißung nach Anspruch 9, wobei die Schweißeinrichtung ortsfest montiert ist und das Förderrad einschließlich des darin aufgenommenen zumindest einen Kettenglieds quer zur Längsrichtung der Kette verschiebbar ist.

11. Vorrichtung nach Anspruch 9 oder 10, wobei das Förderrad ein Doppelkettenrad mit zwei nebeneinander angeordneten Kettenrädern ist, insbesondere Taschenrädern, wobei vorgesehen ist, dass die Kette zweimal um das Förderrad geführt wird, mit einer Verdrehung der Kette in Längsrichtung zwischen diesen beiden Umläufen, wodurch auf einem ersten der Kettenräder liegende Kettenglieder als auf dem zweiten der Kettenräder stehende Kettenglieder geführt sind.

12. Vorrichtung nach Anspruch 11, wobei die Schweißeinrichtung relativ zum Förderrad zudem entlang der Drehachse des Förderrads verschiebbar ist, insbesondere zwischen zwei für die Schweißbearbeitung der beiden stehenden Kettengliedern auf den zwei Kettenrädern geeigneten Positionen.

13. Vorrichtung nach Anspruch 11 oder 12, wobei die für die liegenden Kettenglieder vorgesehenen Positionen in den nebeneinander angeordneten Kettenrädern zueinander winkelmäßig versetzt angeordnet sind.

14. Vorrichtung nach einem der Ansprüche 11 bis 13, wobei zudem zumindest eine gefederte Drehmomentstütze vorgesehen ist, die die Kette beim Zuführen zu dem Kettenförderrad und/oder dem Ableiten von dem Kettenförderrad führt.
